# FASCICULE DE BREVET EUROPEEN

(11) **EP 0 661 527 B1**
(45) Date de publication et mention de la délivrance du brevet: **07.04.1999**
(21) Numéro de dépôt: 94402702.8
(22) Date de dépôt: 25.11.1994
(51) Int. Cl.: G01F 23/296, G01N 29/02

(54) **Dispositif et méthode de détection d'interfaces séparant plusieurs phases par ondes ultrasonores**
Verfahren und Vorrichtung zum Nachweis von mehrere Phasen trennenden Grenzschichten mit Ultraschallwellen
Method and apparatus for detecting interfaces separating several phases with ultrasounds

(30) Priorité: 28.12.1993 FR 9315856
(43) Date de publication de la demande: 05.07.1995
(73) Titulaire: INSTITUT FRANCAIS DU PETROLE, 92506 Rueil-Malmaison (FR)
(72) Inventeur: Castel, Yvon, F-78290 Croissy Sur Seine (FR)

(56) Documents cités:
- EP-A- 0 087 365
- EP-A- 0 115 987
- EP-A- 0 384 373
- DE-A- 3 431 741
- ADVANCES IN ISTRUMENTATION AND CONTROL, vol.46, no.2, 1991, NC, USA pages 1355 - 1366, XP347570 D.DUNCAN 'Ultrasonics in solids level measurement.'

## Description

La présente invention concerne une méthode et un dispositif de détection au moyen d'ondes ultrasonores d'interfaces séparant des phases ayant des impédances acoustiques différentes.

Elle est particulièrement bien adaptée à la détection d'interfaces situées entre les phases constituant un fluide, notamment pour détecter l'interface située entre une phase aqueuse et une phase organique, et l'interface située entre une phase organique et une phase gazeuse, l'une de ces phases pouvant comprendre des matériaux solides, tels que du sable.

Ainsi, elle trouve son application pour un fluide ou effluent pétrolier comportant de l'eau, de l'huile et du gaz notamment hydrocarboné.

Au cours de la production pétrolière, il s'avère nécessaire de disposer d'un dispositif et d'une méthode permettant de donner, en continu ou par échantillonnage successifs, la quantité de chacune des phases constituant l'effluent pétrolier mesurées simultanément en sortie de puits de production, notamment pour les raisons énoncées ci-après. Pour le producteur une telle indication permet d'avoir le volume réel de chaque phase des effluents soutirés d'un gisement en cours de production, et donc d'en déduire le prix exact qu'il doit payer, de voir l'efficacité des procédés de stimulation mis éventuellement en oeuvre, de régler la production des puits pour obtenir une meilleure rentabilité du gisement et de payer les taxes notamment sur les produits valorisables.

Un autre exemple d'application est relatif au transport d'effluents pétroliers de type polyphasique sans séparation des phases et utilisant des dispositifs de pompage dont le fonctionnement optimal dépend à tout instant de la composition des effluents, et plus particulièrement de la connaissance du débit moyen liquide et du rapport volumétrique gaz/liquide.

Divers méthodes et dispositifs sont actuellement utilisés pour déterminer la composition d'un effluent de type polyphasique.

Le brevet français du demandeur FR-2.633.719 décrit un dispositif d'échantillonnage comprenant une enceinte équipée d'un bras mobile interne à l'enceinte, le bras supporte un ou plusieurs capteurs, l'ensemble bras plus capteurs ainsi formé sert au repérage de la position des interfaces situées entre les différentes phases composant le fluide ayant décanté dans l'enceinte. A partir de la position des interfaces et de la géométrie de l'enceinte, il est possible de remonter à la quantité de chacune des phases contenues dans l'enceinte. Le bras est néanmoins un moyen mécanique intrusif qui perturbe, du fait de son déplacement, l'équilibre des interfaces existantes. Par ailleurs, il a été découvert qu'un film adhérent pouvait se former sur les capteurs entraînant des erreurs et/ou des incertitudes dans les mesures.

Les brevets FR-2.522.153 et US-5.119.676 enseignent de déterminer, à l'aide d'ondes ultrasonores, la quantité d'une phase aqueuse et d'une phase gazeuse. Dans le premier document, on mesure la quantité d'eau et la quantité de vapeur d'eau dissoute sous forme de bulles ou non dissoute dans l'eau, en combinant les valeurs de temps de propagation d'ondes ultrasonores obtenues pour deux valeurs de fréquences, et les valeurs des vitesses de propagation de ces ondes dans l'eau et dans le gaz. Il est donc possible, à partir de l'enseignement contenu dans ce document, de remonter à la quantité des deux phases eau et vapeur d'eau présentant des différences acoustiques éloignées.

Le second document enseigne de positionner le capteur ultrason à l'extérieur d'une enceinte pour le soustraire à des conditions contraignantes de température et de pression pouvant régner à l'intérieur de cette enceinte. Il enseigne, de plus, de travailler avec un faisceau d'ondes ultrasonores focalisé, en le guidant dans un tube de manière à éliminer d'éventuelles réflexions parasites pouvant introduire des erreurs dans les mesures. Dans ce brevet, on détecte une interface située entre deux milieux dont les valeurs d'impédances acoustiques sont relativement éloignées.

Ces deux documents concernent uniquement la détection d'une onde réfléchie presqu'en totalité sur une seule interface située entre deux phases dont les valeurs d'impédance sont éloignées.

L'utilisation des ondes ultrasonores dans le domaine de l'exploitation pétrolière est connue pour contrôler le niveau d'interfaces séparant deux phases d'un effluent dans une enceinte. Les appareils commercialisés par la société Milltronics comportent des capteurs d'ultrasons positionnés dans la partie supérieure de l'enceinte du côté de la phase gazeuse de l'effluent. Cette position est dictée par des raisons de facilité d'accès, et du fait de la présence éventuelle de matière solide dans l'effluent telles des particules solides, telles du sable, des hydrates..... Sous l'effet gravitaire, l'accumulation de ces particules peut obstruer un capteur éventuellement situé dans la partie inférieure de l'enceinte.

Il a été découvert et c'est l'objet de la présente invention, que l'on peut déterminer la présence d'interfaces situées entre deux phases ayant des valeurs d'impédance acoustiques voisines mais distinctes, et deux phases ayant des valeurs d'impédance acoustiques relativement éloignées, l'une au moins des phases étant susceptible de comporter des particules solides, en évitant les inconvénients mentionnés ci-dessus. Le résultat est obtenu grâce à l'utilisation d'un dispositif de mesure non intrusif permettant de détecter les échos d'ondes réfléchies sur les interfaces, et de mesurer le temps de propagation de ces ondes réfléchies. Ce dispositif est, par exemple, complété par un moyen de filtration d'éventuelles particules solides contenues dans l'effluent.

Dans toute la suite de la description les termes "phase" et "milieu fluide" désignent le même élément, notamment les différentes parties du milieu présentant des valeurs acoustiques différentes, ces différentes parties prises dans leur ensemble constituant le milieu fluide analysé.

La présente demande concerne un dispositif pour déterminer la composition d'un fluide polyphasique composé de plusieurs phases, lesdites phases étant séparées par une interface, au moins deux desdites phases présentant des impédances acoustiques de valeurs suffisamment éloignées et au moins deux desdites phases ayant des valeurs d'impédances acoustiques sensiblement voisines mais distinctes, ledit fluide pouvant comprendre des particules solides, comportant une enceinte reliée à au moins un conduit d'introduction dudit fluide polyphasique, au moins un premier moyen situé dans ladite enceinte pour générer une première onde ultrasonore selon une direction, non parallèle à ladite interface séparant au moins deux phases, ledit premier moyen étant adapté à recevoir au moins un signal provenant de la réflexion de ladite première onde ultrasonore lorsqu'elle rencontre une interface séparant deux phases, des seconds moyens pour émettre et recevoir une seconde onde ultrasonore et des moyens de traitement. Il est caractérisé en ce que les seconds moyens sont disposés de façon à émettre et à recevoir ladite seconde onde ultrasonore dans une direction sensiblement perpendiculaire à la direction de propagation de la première onde ultrasonore et en ce que les moyens de traitement permettent de mesurer le temps de propagation de ladite première onde jusqu'à une interface, et le temps de propagation de ladite seconde onde à travers une phase et, à partir de données préalablement mémorisées dans les moyens de traitement et des différentes mesures de temps de propagation, de déterminer la quantité d'au moins une des phases contenues dans ledit fluide polyphasique.

La direction d'émission de la première onde ultrasonore est, par exemple, sensiblement perpendiculaire à l'interface, et l'onde ultrasonore rencontre cette interface.

Le dispositif peut comporter un système de filtration d'éventuelles particules solides contenues dans ledit fluide, le système a pour but notamment d'éviter l'accumulation d'éventuelles particules dans la partie inférieure de l'enceinte.

Il peut aussi inclure des moyens pour commander et contrôler un moyen de remplissage et de vidange de l'enceinte.

La présente demande concerne aussi une méthode pour déterminer à l'aide d'au moins une onde ultrasonore la composition d'un fluide polyphasique comportant plusieurs phases, au moins deux desdites phases possèdent des impédances acoustiques de valeurs différentes, ledit fluide pouvant comporter des particules solides. Elle est caractérisée en ce que :
a) on dérive au moins une partie du fluide polyphasique à analyser dans une enceinte,
b) on laisse le fluide polyphasique décanter pendant un temps suffisamment long pour obtenir la séparation des différentes phases,
c) on émet une première onde ultrasonore selon une direction non parallèle à une première interface séparant deux phases, l'onde se propage et traverse l'enceinte,
d) on mesure, à l'aide d'un dispositif approprié au moins un premier temps de propagation T1 correspondant à la réflexion de ladite première onde ultrasonore sur une première interface,
e) on émet une seconde onde ultrasonore selon une direction sensiblement perpendiculaire à la direction de propagation de la première onde, à travers une première phase, lorsque cette dernière se trouve dans la partie inférieure de l'enceinte et on mesure le temps de propagation T'1 de ladite seconde onde dans ladite première phase pour en déduire la vitesse réelle V1 de propagation de l'onde dans la première phase et
f) on détermine, à partir du premier temps de propagation T1, de la valeur de vitesse réelle V1 et des caractéristiques géométriques de l'enceinte, la quantité U1 de la première phase dans l'enceinte.

Le fluide polyphasique pourra comporter plusieurs phases, au moins une première et une deuxième phase ayant des impédances acoustiques de valeurs suffisamment éloignées et, au moins une deuxième phase et une troisième phase ayant des valeurs d'impédances acoustiques suffisamment voisines mais distinctes et éventuellement des particules solides. On pourra procéder de la manière suivante :
- on procède aux étapes a) à e) décrites précédemment,
- on mesure au moins les temps de propagation T1 et T2 correspondant respectivement à la réflexion de ladite première onde ultrasonore sur la première et la seconde interface séparant respectivement les première et seconde phases et les seconde et troisième phases,
- on mesure la vitesse réelle de propagation de l'onde dans la première phase selon l'étape e) décrite précédemment,
- on évacue de l'enceinte ledit fluide pendant un temps suffisamment long pour amener ladite seconde phase au niveau de la partie inférieure de l'enceinte, on envoie une seconde onde ultrasonore selon une direction sensiblement perpendiculaire à la direction de propagation de la première onde, à travers une première phase, cette dernière se trouvant dans la partie inférieure de l'enceinte et on mesure le temps de propagation T'2 de ladite seconde onde dans ladite seconde phase pour en déduire la vitesse réelle V2 de propagation de l'onde dans la seconde phase, et
- on détermine à partir des temps de propagation T1 et T2, des valeurs de vitesses réelles V1 et V2, et des caractéristiques géométriques de l'enceinte, les quantités U1 et U2 de la première et de la seconde phase.

On pourra mesurer l'atténuation de l'onde après réflexion sur une interface.

La méthode permet de plus d'éviter l'accumulation de dépôts de particules solides dans l'enceinte munie d'une membrane en procédant aux étapes suivantes :
- on dérive au moins une partie du fluide polyphasique dite échantillon à analyser dans l'enceinte,
- on laisse décanter la partie dérivée du fluide et on effectue des mesures,
- après avoir effectué les mesures, on introduit par la partie supérieure de l'enceinte une quantité de fluide passant préalablement à travers un dispositif de filtration, ladite quantité de fluide étant suffisante pour pousser la membrane vers la partie inférieure de l'enceinte de manière à évacuer l'échantillon de fluide polyphasique, les particules éventuelles ayant sédimenté dans la partie inférieure de l'enceinte sont entraînées avec l'échantillon évacué de l'enceinte.

Pour un fluide polyphasique comportant au moins trois phases on pourra déterminer la quantité de la troisième phase par exemple à partir des caractéristiques géométriques de l'enceinte et des quantités U1 et U2.

On pourra aussi mesurer le temps t nécessaire au remplissage total de l'enceinte et déduire, à partir de ce temps t, le débit de chacune des phases constituant ledit fluide.

On pourra effectuer, par exemple, un contrôle de la représentativité du fluide polyphasique prélevé pendant le remplissage de l'enceinte.

Une des applications possible de la méthode et du dispositif selon l'invention consiste à déterminer la composition d'un effluent pétrolier.

La méthode et le dispositif selon l'invention s'appliquent aussi à la détection d'une première interface située entre une phase aqueuse et une phase organique et une seconde interface séparant une phase organique et une phase gazeuse, ces phases constituant la majorité de l'effluent pétrolier.

La méthode et le dispositif selon l'invention s'appliquent également bien à la détermination du débit de chacune des phases contenues dans un effluent pétrolier.

La présente invention sera mieux comprise et ses avantages apparaîtront clairement à la lecture de quelques exemples illustrés par les figures suivantes parmi lesquelles :
- la figure 1 schématise un dispositif selon l'invention appliqué à la détermination de la quantité de chacune des phases contenues dans un effluent polyphasique,
- la figure 2 représente de façon plus détaillée, la partie inférieure du dispositif équipée d'émetteurs-récepteurs d'ondes ultrasonores, et
- la figure 3 représente un dispositif dans lequel l'enceinte est associée à une série d'analyseurs.

Dans l'invention décrite ci-après, on utilise le fait que la réflexion d'une onde ultrasonore se propageant dans un milieu comportant plusieurs phases d'impédance acoustiques différentes, est fonction de la différence des valeurs d'impédances acoustiques séparant deux phases successives adjacentes. Ainsi lorsque deux phases ont des valeurs d'impédances acoustiques relativement éloignées, l'onde se réfléchit presque en totalité sur l'interface séparant ces deux phases, alors que pour deux phases ayant des valeurs d'impédance sensiblement voisines mais distinctes, l'onde ultrasonore se réfléchit en partie seulement sur l'interface. Les signaux provenant des réflexions présentent ainsi des caractéristiques différentes.

La détection d'interfaces se fait sans introduire de perturbation qui pourraient être due à la présence intrusive d'un instrument de mesure.

En combinant des résultats de mesures relatives à l'écho d'ondes ultrasonores sur un obstacle, du temps de propagation de l'onde dans les différents milieux fluides ou phases, il est possible de déterminer la quantité de chacune des phases constituant un fluide polyphasique.

De manière simultanée, on peut effectuer des mesures du temps aller et retour d'une onde ultrasonore, plus communément appelé temps de vol, pour déterminer la vitesse réelle de propagation d'une onde dans une phase, et ainsi s'affranchir des paramètres tels que la température, ou la nature des phases.

Le dispositif et la méthode selon l'invention fonctionneront de manière optimale pour des valeurs de rapport d'impédances acoustiques données ci-après :
- dans le cas de valeurs d'impédances acoustiques sensiblement voisines, l'intervalle de variation du rapport des impédances acoustiques séparant deux phases varie, par exemple, entre 0.5 et 10 et,
- pour ces valeurs d'impédances acoustiques éloignées une valeur de rapport variant, par exemple dans une fourchette allant de 1000 à 5000.

Ces valeurs sont données uniquement à titre indicatif et non limitatif, et concernent plus particulièrement l'application décrite ci-après.

Outre la mesure de l'arrivée ou réception des ondes réfléchies sur les interfaces, les signaux réfléchis par les interfaces peuvent être analysés en amplitude et en décalage de fréquence, selon des procédés classiques utilisés pour !'analyse des signaux. Cette analyse permet, par exemple, de suivre l'évolution dans le temps des qualités des effluents recueillis dans l'enceinte, les signaux analysés étant par exemple corrélés avec des résultats préalables effectués sur des échantillons de référence.

De façon simultanée, la méthode met en jeu, par exemple, un système ou dispositif de filtration pour évacuer l'échantillon de fluide contenu dans l'enceinte en entrainant d'éventuelles particules déposées et accumulées dans la partie inférieure de l'enceinte et risquant d'obstruer le dispositif d'ondes ultrasonores.

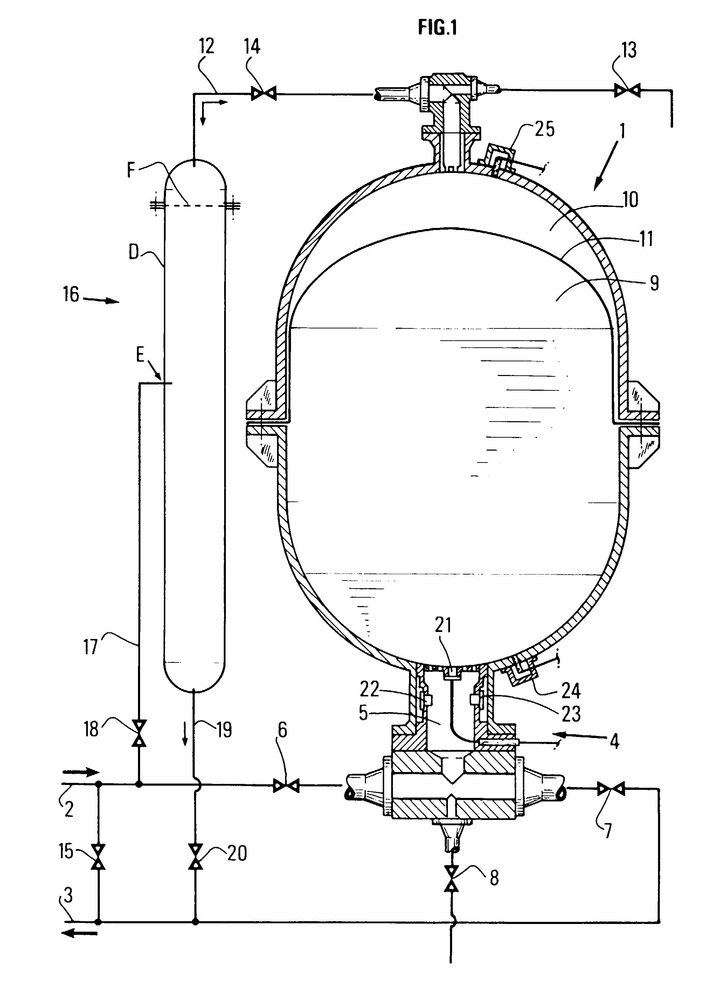

Le dispositif de la figure 1 est particulièrement bien adapté à l'analyse et à la quantification des phases contenues dans un effluent polyphasique pétrolier, c'est-à-dire une phase aqueuse telle que de l'eau, une phase organique, par exemple de l'huile et une phase gazeuse hydrocarbonée. Les différentes phases sont habituellement accompagnées de particules solides, telles que du sable ou encore des hydrates qui peuvent, sous l'effet de leur poids, tomber et s'accumuler sur l'émetteur-récepteur d'ultrasons et conduite à des valeurs de mesures erronées. L'effluent est, dans cet exemple de réalisation, dérivé d'une conduite de transport vers un réservoir ou enceinte 1 dans lequel il est soumis à une décantation pour obtenir une séparation naturelle des phases.

Le réservoir 1 est relié, par l'intermédiaire d'une embase 4, à une conduite d'arrivée 2 et à une conduite 3 d'évacuation des effluents. Les conduites 2 et 3 sont, par exemple, des conduites de dérivation reliées à une conduite de transfert principal des effluents entre une source et un lieu de traitement, non représentés sur la figure pour des raisons de simplification. Les conduites 2 et 3 se prolongent dans l'embase 4 par une conduite 5 débouchant dans le réservoir 1.

Les conduites 2 et 3 sont équipées respectivement d'une vanne de puisage 6 contrôlant l'arrivée de l'effluent et d'une vanne de décharge ou d'évacuation 7 de l'effluent.

Les conduites 2 et 3 sont reliées l'une à l'autre par une conduite équipée d'un by-pass 15.

L'embase 4 comporte dans sa partie inférieure un conduit 8 de purge du réservoir.

Le réservoir 1 comprend une chambre de puisage 9 et une chambre auxiliaire 10 séparées l'une de l'autre par une membrane souple 11. L'effluent prélevé est stocké jusqu'au remplissage total de la chambre de puisage 9 et analysé après séparation naturelle des différentes phases le constituant au moyen d'au moins une onde ultrasonore en suivant, par exemple, les étapes décrites ci-après.

La chambre auxiliaire 10 est reliée, d'une part à une conduite de compensation 12 équipée d'une vanne d'isolement 14 et d'autre part à une vanne de purge 13 disposée, de préférence, en tête de la chambre auxiliaire 10.

La conduite de compensation 12 relie la chambre de puisage 9 à un dispositif de filtration 16 composé, par exemple, d'un ballon de décantation D équipé d'un filtre F situé dans sa partie supérieure, ayant pour rôle principal d'empêcher l'entrée d'éventuelles particules solides dans le réservoir 1, par exemple du sable ou des hydrates, lorsque l'on évacue le réservoir du contenu de la chambre 9.

Le dispositif 16 est aussi relié à la conduite 2 d'arrivée des effluents par une conduite 17 comportant une vanne de dérivation 18, cette conduite débouchant dans le ballon décantateur D par une entrée latérale décentrée E qui induit un effet cyclone favorisant la séparation des particules solides de l'effluent.
Il est relié à la conduite 3 de retour des effluents par une conduite 19 équipée d'une vanne 20, la conduite étant située dans la partie inférieure du ballon D de façon à évacuer les particules solides allant vers le bas sous l'effet de gravitation.

La position du filtre F dans la partie supérieure du ballon D est choisie pour que la vitesse des effluents soit réduite lorsque les effluents passent à travers.

Ainsi, pour un ballon D ayant un diamètre de 20 mm, l'entrée a par exemple un diamètre de 4 mm. Le filtre F peut être un filtre à 10µm, assurant ainsi un taux de passage d'environ 10%.

L'agencement du dispositif 16 de filtration, du réservoir 1 et des conduites 2 et 3 est tel qu'il constitue un système autonettoyant. En effet, lorsque l'on purge la partie supérieure du réservoir 1, les effluents expulsés nettoient le filtre en entraînant les particules déposées sur sa face inférieure vers la partie inférieure du ballon décanteur D et à travers la conduite 19.

Le réservoir 1 est équipé dans sa partie inférieure de moyens adaptés pour des mesures de temps de vol d'une onde ultrasonore. Ainsi, il comprend dans sa partie inférieure un transducteur ou émetteur-récepteur 21 émettant une onde ultrasonore en direction d'au moins une des interfaces séparant les différentes phases de l'effluent. Il comporte aussi un ensemble composé d'un émetteur 22 et d'un récepteur 23 générant et recevant des ondes ultrasonores à travers l'effluent en écoulement dans la conduite 5. L'émetteur 22 et le récepteur 23 sont décalés l'un par rapport à l'autre de manière à effectuer une mesure de temps de vol bien connue des spécialistes, et mesurent ainsi la vitesse réelle de propagation de l'onde ultrasonore dans chacune des phases constituant l'effluent. Cette mesure de manière avantageuse, améliore le calcul de la quantité des phases en remplaçant la vitesse estimée de propagation de l'onde dans une phase par une mesure réelle comme il est décrit dans la suite de la description.

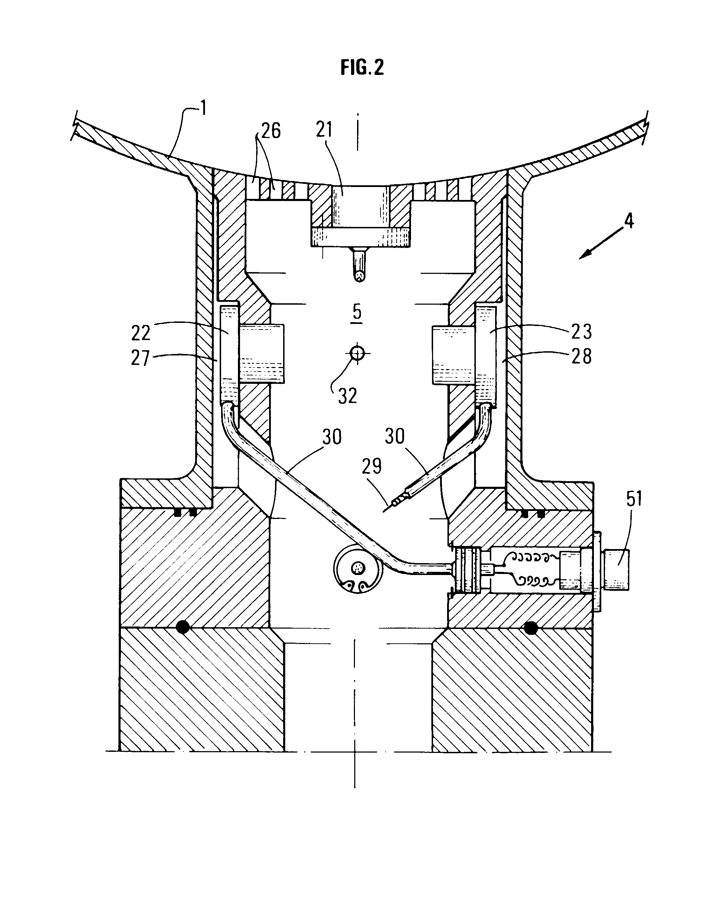

Les dispositifs 21, 22 et 23 ainsi que leur disposition, sont décrits plus en détail en se référant à la figure 2.

Des détecteurs de position 24 et 25, disposés respectivement dans la partie inférieure et supérieure de l'enceinte, permettent de contrôler le remplissage du réservoir, par l'intermédiaire par exemple, d'un contrôle de position de la membrane 11.

Le dispositif comporte également un moyen de commande et de contrôle des différentes étapes mises en oeuvre selon la méthode décrite ci-après tel qu'un micro-contrôleur M, non représenté sur la figure 1. Ce dernier est équipé, par exemple, d'une carte d'acquisition et de génération de signaux, et d'un logiciel de traitement et de pilotage, permettant d'acquérir, de mémoriser et de traiter les données. Les différents capteurs et moyens de mesure sont reliés au micro-contrôleur M par des liaisons électriques classiques, bien connues des spécialistes.

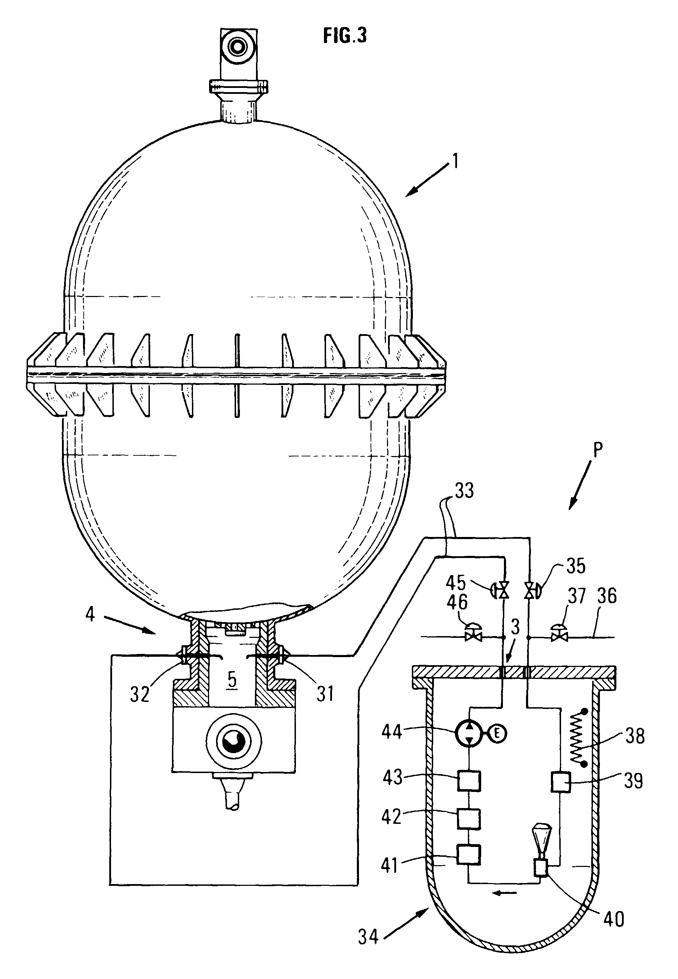

Il est ainsi possible d'analyser le signal, par exemple en mesurant la variation de l'onde ultrasonore après réflexion sur une interface, son atténuation et son déphasage, et d'en déduire par comparaison avec des mesures antérieures préalablement mémorisées dans le micro-contrôleur M, la qualité de chacune des phases et/ou les variations de qualité de la phase fluide après séparation (évolution soit naturelle des effluents du gisement, soit artificielle liée à des moyens d'activation de la production), le recalage pouvant se faire par analyse au laboratoire de prélèvement in situ, décrit ci-après à la figure 3.

Le réservoir 1 est, par exemple, constitué de deux demi-coquilles insérant la membrane 11 prolongé dans sa partie inférieure par un conduit.

La figure 2 schématise de manière plus détaillée la partie inférieure du réservoir et ses équipements de mesure associés. L'émetteur-récepteur 21 est positionné, par exemple, dans la partie inférieure de l'enceinte d'une façon telle que son axe d'émission-réception soit sensiblement vertical et perpendiculaire aux interfaces existant entre les différentes phases après décantation de l'effluent dans la chambre de puisage. Les interfaces détectées sont, par exemple, une interface eau/huile et une interface huile/gaz. Une grille d'appui 26 entoure l'émetteur-récepteur 21 de manière à éviter la perforation de la membrane 11 (Fig.1) lorsque des écarts de pression accidentels surviennent dans le réservoir 1, par exemple, lorsque la membrane se trouve en fin d'expulsion de l'effluent dans la partie inférieure du réservoir 1 lors du changement d'échantillon prélevé.

Une grille de structure similaire (non représentée sur les figures) peut éventuellement être positionnée dans la partie supérieure du réservoir 1 au voisinage de la conduite 12.

L'émetteur-récepteur 21 peut être encapsulé dans une jaquette en matériau de type diélectrique, tel que du Rilsan, de façon à éviter le contact direct avec des effluents agressifs chimiquement.

La paroi du réservoir 1 peut comporter dans sa partie inférieure des logements ou cavités 27, 28 destinés à recevoir respectivement l'émetteur 22 et le récepteur 23 d'ondes ultrasonores, les émetteurs étant disposés en vis-à-vis selon un axe, et situés à une distance l'un de l'autre fixe "L" et connue. Ils sont constitués d'un ou plusieurs éléments piézo-électriques, de conception semblable à l'émetteur-récepteur 21. Les faces d'émission et de réception de ces éléments débouchent dans le conduit 5. L'émetteur et le récepteur sont, par exemple, reliés chacun par un câble coaxial 29, inséré dans un tube métallique 30, à un connecteur électrique coaxial 51 étanche ayant notamment pour rôle d'assurer les liaisons électriques et le transfert des mesures du dispositif vers le micro-contrôleur M et/ou vers des dispositifs situés à l'extérieur du réservoir et non représentés sur la figure. Ces dispositifs peuvent comprendre notamment des générateurs de tension électrique d'un type bien connu des spécialistes utilisés pour le fonctionnement des émetteurs d'ultrasons et de tout dispositif nécessaire au fonctionnement de l'appareil.

Le tube métallique 30 traverse, par exemple, les parois de la partie inférieure du réservoir au moyen de connecteurs étanches et antidéflagrants bien connu de l'homme de métier, tels des cloisons commercialisées par la société Deutsch où les conducteurs passent à travers des perles de verre étanches. Il est, par exemple, en matériau étanche et résistant mécaniquement à la pression externe et aux agressions chimiques provenant des produits contenus dans les effluents, tels le CO₂, H₂S et les saumures.

Lorsque cela se révèle nécessaire, les céramiques piézo-électriques sont noyées dans un fluide diélectrique en équipression avec la pression statique externe au transducteur grâce à un soufflet métallique d'équipression constitué de matériaux chimiquement résistants aux produits pétroliers.

L'embase est éventuellement munie d'un conduit de prélèvement 32 débouchant dans un circuit d'analyse des effluents décrit en référence avec la figure 3.

Une des façons de mettre en oeuvre la méthode selon l'invention consiste à effectuer, par exemple les étapes suivantes : avant de déclencher les opérations de mesure, on s'assure à l'aide du détecteur de position 24 que la membrane 11 est dans une position basse, c'est-à-dire située dans la partie inférieure du réservoir 1. Le micro-contrôleur M, ayant vérifié cette position commande le remplissage de la chambre de puisage 9 et, de préférence simultanément la vidange de la partie supérieure du réservoir situé au-dessus de la membrane 11 en commandant l'ouverture de la vanne d'isolement 14, de la vanne 20 et de la vanne 6 pour laisser passer l'effluent de la conduite 2 vers le réservoir 1. Simultanément à ces opérations, il commande la fermeture des vannes 7, 18 et 15 (by-pass). Dès que le détecteur 25 détecte la présence de la membrane 11, il envoie au micro-contrôleur M un signal lui indiquant la fin de remplissage de la chambre de puisage. Ce signal indique au micro-contrôleur d'envoyer un ordre de fermeture des vannes 6 et 14 pour isoler le réservoir et simultanément un ordre ouverture de la vanne de by-pass 15.

Le micro-contrôleur mémorise au début du remplissage de la chambre de puisage l'instant à laquelle est émise la première onde ultrasonore, ce qui correspond à un top de départ, il mémorise l'instant correspondant à la fin de remplissage du réservoir, relié à la commande de fermeture des vannes 6 et 14. Il déduit ainsi la durée totale t du remplissage du réservoir correspondant à la durée écoulée entre ces deux instants.

Après avoir attendu un certain temps, par exemple le temps nécessaire pour obtenir la séparation par décantation des phases présentes dans l'effluent, le micro-contrôleur génère un signal pour réaliser différentes mesures décrites ci-après. Il commande l'émission d'une onde ultrasonore à partir de l'émetteur 21 à une fréquence dont la valeur est choisie en fonction de l'effluent. La direction de propagation de l'onde est, par exemple, non parallèle à l'interface séparant les différentes phases, et de préférence sensiblement perpendiculaire aux interfaces séparant les phases qu'elle rencontre. L'onde peut se propager selon un parcours sensiblement vertical à travers la chambre de puisage. Le micro-contrôleur mesure le temps de propagation T1 de cette onde au retour de réflexion sur une première interface, séparant par exemple l'eau et l'huile, et mémorise cette première valeur. La mesure de temps de propagation se fait par une méthode bien connue des spécialistes, le micro-contrôleur déclenche au moment où il émet l'onde ultrasonore un top d'émission puis au retour de cette onde après réflexion sur l'interface un top de réception. Le temps T1 correspondant à la durée entre le top d'émission et le top de réception est représentatif du parcours double de l'onde de l'émetteur à l'interface et de l'interface au récepteur.

De manière identique, le micro-contrôleur effectue ensuite une mesure d'un second temps T2 de propagation lié à la réflexion de l'onde sur une seconde interface, lorsque cette dernière existe, telle qu'une interface huile/gaz pour des effluents pétroliers, qu'il mémorise ensuite.

Pour des effluents pétroliers contenant de l'eau, de l'huile et du gaz, la répartition des phases après décantation en partant du bas du réservoir, est la suivante : eau - huile - gaz.

Dans ce cas, la détermination de la quantité des phases peut se faire de la manière suivante : à partir du temps de propagation T1 et de la valeur estimée de la vitesse de propagation de l'onde dans l'eau V1, le micro-contrôleur M détermine la hauteur de l'eau contenue dans le réservoir. Connaissant les caractéristiques géométriques du réservoir, mémorisées préalablement dans le micro-contrôleur, ce dernier détermine la quantité d'eau U1. Il traite de manière identique les données correspondantes à la deuxième interface et détermine la quantité d'huile U2 contenue dans le réservoir, à partir du temps de propagation T2, de la valeur estimée de la vitesse de propagation d'une onde dans l'huile, des caractéristiques géométriques du réservoir et de la quantité d'eau U1 préalablement déterminée.

Les valeurs estimées des vitesses de propagation d'une onde ultrasonore dans l'eau et dans l'huile ont été obtenues, par exemple, au cours d'essais préalables sur des phases sensiblement monophasique de composition connue et pour des valeurs de pression et de température données, elles ont été ensuite mémorisées dans le micro-contrôleur préalablement aux essais.

Afin d'améliorer la précision des résultats, il est possible de déterminer la vitesse réelle de propagation des ondes ultrasonores dans les phases pour des valeurs de pression et de température régnant dans le réservoir, ces valeurs étant mesurées par des capteurs appropriés Cp et Ct situés dans le réservoir et non représentés sur la figure pour des raisons de clarté.

Une manière d'obtenir les valeurs des différentes vitesses de propagation d'une onde ultrasonore fait appel aux étapes suivantes :
- l'effluent après décantation dans le réservoir se trouve sous la forme de plusieurs phases empilés sur la hauteur en fonction de leur densité. Ainsi l'eau se trouve située dans la zone inférieure du réservoir et en partie dans le conduit 5 où elle se trouve en contact avec l'émetteur 22 et le récepteur 23. A l'aide d'une mesure du temps de vol sur la distance "L" séparant l'émetteur 22 du récepteur 23, le micro-contrôleur M détermine la vitesse réelle V1 de propagation de l'onde dans l'eau. Pour cela le micro-contrôleur envoie un ordre à l'émetteur 22 d'émission d'une onde et un ordre de réception au récepteur 23.
- le micro-contrôleur envoie ensuite un signal de commande d'ouverture de la vanne de décharge 7, des vannes 18 et 14 et de fermeture de la vanne 15 du By-pass jusqu'à ce que l'huile atteigne l'émetteur 22. Le contrôle de cette opération dite de purge se fait, par exemple, de la manière suivante : le temps de propagation T2 de l'onde dans l'huile étant connu par les mesures précédentes, et à l'aide de la valeur estimée de la vitesse, le micro-contrôleur détermine la hauteur d'huile Hh dans le réservoir qui correspond à (T2-T1)/V2, et donc en combinant les caractéristiques géométriques du réservoir, la quantité d'huile Uh. Connaissant le temps de remplissage total du réservoir t, la quantité d'eau Ue, la quantité d'huile Uh et le débit moyen Qt (donné par le rapport du volume du réservoir au temps de remplissage total du réservoir), le micro-contrôleur détermine le temps Tp =(Ue+Uh)/Qt nécessaire pour évacuer l'eau et par exemple au moins la moitié de l'huile. On purge le réservoir pendant le temps Tp pour que l'huile soit en contact avec l'émetteur 22 et le récepteur 23. Le micro-contrôleur détermine alors en procédant aux étapes décrites précédemment, la vitesse réelle V2 à laquelle se propage une onde ultrasonore dans une phase organique telle que de l'huile. A partir des vitesses réelles V1 et V2 de propagation d'une onde ultrason dans l'eau et dans l'huile, et des mesures de temps T1 et T2, le micro-contrôleur détermine avec précision les quantités respectives Ue et Uh de l'eau et de l'huile contenues dans le réservoir.

La quantité de gaz Ug est déduite, par exemple, à partir des quantités d'eau Ue, d'huile Uh et du volume total du réservoir Ur.

Connaissant le temps t de remplissage total du réservoir et les quantités respectives d'eau, d'huile et de gaz, le micro-contrôleur en déduit les valeurs respectives des débits Qe de l'eau, Qh de l'huile et Qg du gaz et les rapports usuels connus sous les termes GOR (Gas Oil Ratio) et GLR (Gas Liquid Ratio) à la pression et température du réservoir, ces deux dernières valeurs étant mesurées à l'aide de capteurs de pression et de température adaptés, non représentés sur les figures.

Avantageusement, il est possible d'améliorer le contrôle de la purge de l'enceinte en utilisant une vanne de régulation faisant office de duse à section variable comme vanne de décharge.

Avantageusement, cette duse limite la vitesse de descente des interfaces séparant les phases d'un effluent pour éviter les perturbations telles les vagues et le phénomène de vortex dans l'enceinte et conserver ainsi les interfaces sensiblement horizontales.

En associant des mesures répétitives de temps de vol et des variations de l'amplitude des signaux ou échos de l'onde réfléchie par les interfaces, il est possible de connaître à tout moment la position de ces interfaces lors du vidage de l'enceinte.

La position du premier interface huile/eau peut être détecté et contrôlé, par exemple, à l'aide de la variation du temps de vol, par exemple sa diminution, et l'augmentation de l'amplitude du premier signal réfléchi ou premier écho.

On peut contrôler de manière identique la position du deuxième interface, huile/gaz, à l'aide des valeurs du deuxième signal réfléchi ou écho.

La mesure de temps de vol associée à une valeur de vitesse de l'onde dans l'huile, préenregistrée dans le micro-contrôleur permet notamment de connaître la position d'un niveau dans l'enceinte, et, pour une valeur donnée de fermer la vanne de purge. La seconde phase de l'effluent, l'huile par exemple, se trouve alors dans l'espace inférieur de l'enceinte, dans la zone où se trouvent les capteurs de mesure de la vitesse réelle de propagation des ondes dans l'effluent.

La vanne de purge reste en état fermé pendant le temps suffisant pour effectuer la mesure de cette vitesse réelle de propagation dans le second effluent.

Les valeurs des vitesses de propagation mesurées dans les deux effluents liquides principaux sont entrées en mémoire dans le micro-ordinateur. Elles permettent, par exemple, d'obtenir les débits pour chaque phase. Il n'est pas nécessaire pour un gisement ou puits d'effluent en production donné, de vérifier systématiquement les vitesses de propagation à chaque remplissage/vidage de l'enceinte. Le contrôle des variations possibles est cependant utile pour s'assurer du bon fonctionnement des appareils de mesure et suivre l'évolution dans le temps des propriétés des effluents en particulier en cas d'injection de fluides traités dans des puits environnants.

Une autre manière de procéder consiste à effectuer un contrôle de la qualité de la phase pour laquelle on mesure la vitesse réelle. On peut opérer de la manière suivante : le signal reçu par le récepteur 23 est analysé en amplitude et/ou en phase et comparé à des valeurs préalablement mémorisées dans le micro-contrôleur M.

Ainsi, à une température et à une pression donnée, les valeurs d'amortissement d'une onde ultrasonore exprimées en dB/cm sont, par exemple :
- pour une huile raffinée ou un brut dit léger, égale à 0,13,
- pour un brut épais égale à 0,91
- pour une eau de mer égale à 0,007, et 0,06 pour une eau de gisement très salie,
- pour le gaz, l'atténuation est très élevée et dépend de sa constitution complexe, de sa pression, de sa température et de sa fréquence.

La différence entre ces valeurs est néanmoins suffisante pour discriminer ces trois phases pour une onde ayant une puissance d'émission et une fréquence données. La confirmation pourra être donnée par un étagement de la fréquence technique, connue des spécialistes et non décrite. En particulier pour le gaz, il est souhaitable d'utiliser des fréquences proches des fréquences audibles.

La mesure est effectuée, de préférence, en continu ce qui permet au micro-contrôleur d'associer à une mesure de temps de vol, la nature d'une phase.

La méthode telle qu'elle a été décrite ci-dessus, présente l'avantage d'offrir un dispositif autonettoyant de l'enceinte, et ainsi d'améliorer la durée de vie de la membrane.

On procède pour cela aux étapes suivantes, on réalise un cycle de mesures de la manière décrite précédemment en relation avec les figures 1 et 2, par exemple. Le cycle de mesure étant terminé, on procède à une opération consistant à évacuer l'échantillon de fluide sur lequel on vient d'effectuer les mesures. Le micro-contrôleur donne un signal commandant l'ouverture de la vanne de dérivation 18, de la vanne d'isolement 14 et de la vanne d'évacuation 7, et simultanément il contrôle l'état de fermeture de la vanne 6 et de la vanne 15. Le fluide dérivé de la conduite 2 pénètre alors dans le ballon de décantation D, où sa vitesse est ralentie et passe ensuite par le filtre F situé dans la partie supérieure du ballon, la vanne 20 étant dans un état fermé. Ce filtre est, par exemple, un filtre calibré à une centaine de microns de type classiquement utilisé par un spécialiste, et plus particulièrement dans l'industrie pétrolière. Le fluide pénètre ensuite dans la partie supérieure de l'enceinte par le conduit 12 au-dessus de la membrane et repousse cette dernière vers la partie inférieure de l'enceinte. Lorsque le capteur 24 détecte la position de la membrane 11 dans la partie inférieure de l'enceinte, il envoie un signal au micro-ordinateur indiquant la fin d'évacuation de l'échantillon de fluide correspondant à une fin de cycle de mesure. Un nouveau cycle de mesure peut alors être redéclenché.

Pendant toutes les phases, remplissage, mesure et évacuation de la chambre de puisage 9, l'émetteur-récepteur 21, I'émetteur-récepteur 22 et le récepteur 23 sont gardés en fonctionnement, ce qui empêche toute particule sédimentant de se coller sur la face émettrice qui, de ce fait, est autonettoyante, la fréquence de nettoyage pouvant être différente des fréquences de mesure.

Les particules remises en suspension par l'émetteur 21, par l'effet mécanique induit par l'onde ultrasonore, s'évacuent par les trous de remplissage 26 qui peuvent être de nature sensiblement identique à la nature du filtre F du décanteur, limitant la granulométrie des grains de sable entraînés par les effluents liquides. L'évacuation de l'échantillon nettoie à nouveau la grille du filtre par circulation inverse de l'effluent.

La réduction de la vitesse du fluide facilite le dépôt des particules solides éventuellement incluses dans le fluide, dans la partie inférieure du ballon de décantation D. L'introduction du fluide s'effectue de manière préférentielle par une entrée latérale du ballon décantateur D, décentrée, générant ainsi un effet de cyclone favorisant la séparation des particules solides de l'effluent.

Le filtre F est nettoyé au cours de la phase de remplissage de la chambre de puisage par l'échantillon de fluide à analyser. En effet, lors de cette phase de remplissage, l'échantillon de fluide repousse la membrane vers la partie supérieure de l'enceinte, et provoque ainsi l'évacuation du fluide compris entre la membrane et la partie supérieure de l'enceinte par le conduit 12. Le fluide évacué pénètre dans le ballon de décantation dans un sens inverse au sens de son introduction, et chasse les particules solides qui se sont éventuellement déposées sur la face inférieure de la membrane. On évite ainsi l'obstruction du filtre.

Lors de cette opération, la vanne 19 est ouverte et permet le passage du fluide dans la conduite d'évacuation 3. Les particules solides éventuellement déposées dans la partie inférieure du ballon régulateur sont entraînées (ces particules peuvent s'être accumulées lors de la phase de remplissage du ballon décantateur et/ou du filtre).

Cette manière de procéder offre l'avantage d'être assimilable à un système autonettoyant qui protège la face supérieure de la membrane contre le piégeage des particules, tels que des particules de sable.

Dans un autre mode de réalisation décrit en rapport avec la figure 3, le dispositif présente la possibilité d'effectuer un contrôle en ligne de la composition de l'effluent.

Le fonctionnement d'un tel système est facilité en positionnant les conduits de prélèvement 31 et de retour 32 à proximité des émetteurs, récepteurs situés dans le conduit 5. En effet, au cours de l'opération qui consiste à purger la chambre de puisage, les différentes phases eau, huile et gaz passent obligatoirement devant les éléments de mesures.

Les conduits de prélèvement 31 et de retour 32 sont reliés à un circuit de prélèvement P alimentant une série d'analyseurs disposés dans une enceinte étanche 34 et pressurisée à la pression atmosphérique.

Le circuit de prélèvement comporte une vanne 35 télécommandée et un branchement 36 normalement obturé par la vanne 37 qui est alimenté en eau de mer pour le rinçage des circuits. On peut aussi utiliser de l'eau ayant décantée provenant des effluents.

L'enceinte 34 protégeant la série d'analyseurs comporte différents éléments permettant d'effectuer une analyse du fluide, tels que des moyens de chauffage 38, un analyseur de conductivité thermique 39, un analyseur de viscosité à cylindres coaxiaux, un contrôleur de pression et de température 40, un densitomètre 41 vibrant, un pH-mètre 42, un analyseur de résistivité 43 et une pompe de circulation 44 des échantillons.

Après analyse des échantillons de fluide, ces derniers retournent dans la chambre de puisage par la conduite 33 qui peut être obturée par une vanne 45 et le conduit 32. Le circuit de retour comporte une branche de dérivation, une vanne 46 qui, notamment, permet de renvoyer l'eau de rinçage dans la mer ou d'effectuer un prélèvement d'eau de mer utilisé pour le contrôle et le réétalonnage des différents appareils de mesures décrits précédemment.

Les vannes situées sur les conduites sont, de préférence, télécommandées.

On peut aussi contrôler la représentativité de l'effluent prélevé en utilisant un dispositif de contrôle tel que celui décrit dans le brevet français FR 2.633.719 du demandeur ou tout autre dispositif capable d'effectuer ce contrôle.

Les résultats ont permis d'obtenir une précision de mesure inférieure au pourcent, qui permet, par exemple, d'utiliser ce dispositif comme dispositif d'étalonnage plus particulièrement pour le contrôle des appareils fonctionnant en continu, installés sur des champs pétroliers en exploitation ou sur des stations d'essais. On peut ainsi régler ou vérifier ces appareils à tout moment quel que soit le type d'écoulement polyphasique, à bulles, stratifié, à vagues, à bouchons.....

Les méthodes de mesure des temps de propagation, aller et retour et de l'amortissement des ondes ultrasonores utilisées pour la mise en oeuvre de la présente invention ainsi que leur traitement sont bien connues. Elles dérivent des méthodes utilisées dans les sonars de détection sous-marin, ou des techniques d'étude des couches sédimentaires par sismique bien connues des spécialistes de la géologie. On utilisera de préférence des méthodes employées dans le domaine médical et plus particulièrement les méthodes employées pour effectuer des échographies ultrasonore.

Des essais réalisés sur différents fluides dont les caractéristiques sont regroupés dans le tableau ci-dessous et obtenus pour une valeur de fréquence de 1 MHz ont donnés de bons résultats dans la détection des différences interfaces.

Ces valeurs sont données pour une température variant entre 0 et 20°C, pour laquelle les valeurs d'impédance acoustiques sont sensiblement stables. L'influence de la valeur de pression dans la gamme de travail où l'on se situe est négligeable.

| Fluide | Impédance acoustique donnée en Rayls | Valeur des rapports d'impédance | Phase |
|---|---|---|---|
| Eau douce | 1,43 10⁶ | | Phase 1, par exemple |
| Eau de mer | 1,55 10⁶ | | |
| Eau de gisement | 2,2 10⁶ | | |
| | | eau/huile 1,1 - 2 | |
| Huile raffinée | 1,2 10⁶ | | Phase 2 |
| Brut 1 | 1,1 10⁶ | | |
| Brut 2 | 1,3 10⁶ | | |
| | | 1,510³ --> 410³ | |
| Méthane | 308 | huile/gaz | Phase 3 |
| Dioxyde de carbone | 662 | | |
| Air | 428 | | |

Les bruts 1 et 2 proviennent d'effluents après séparation de la phase aqueuse et de la phase gazeuse. Ils peuvent être assimilés à une phase organique en ce qui concerne les valeurs des impédances acoustiques, par exemple.

Pour s'affranchir des variations des valeurs des impédances acoustiques en fonction de la température, il est possible de calorifuger la cuve.

Bien entendu, diverses modifications et/ou adjonctions peuvent être apportées par l'homme de métier à la méthode et au dispositif dont la description vient d'être donnée à titre nullement limitatif, sans sortir du cadre de l'invention.

## Revendications

1. Dispositif pour déterminer la composition d'un fluide polyphasique composé de plusieurs phases, lesdites phases étant séparées par une interface, au moins deux desdites phases présentant des impédances acoustiques de valeurs suffisamment éloignées et au moins deux desdites phases ayant des valeurs d'impédances acoustiques sensiblement voisines mais distinctes, ledit fluide pouvant comprendre des particules solides, comportant une enceinte (1) reliée à au moins un conduit d'introduction (2, 5) dudit fluide polyphasique, au moins un premier moyen (21) situé dans ladite enceinte pour générer une première onde ultrasonore selon une direction, non parallèle à ladite interface séparant au moins deux phases, ledit premier moyen étant adapté à recevoir au moins un signal provenant de la réflexion de ladite première onde ultrasonore lorsqu'elle rencontre une interface séparant deux phases, des seconds moyens (22, 23) pour émettre et recevoir une seconde onde ultrasonore et des moyens de traitement (M), caractérisé en ce que les seconds moyens sont disposés de façon à émettre et recevoir ladite seconde onde ultrasonore dans une direction sensiblement perpendiculaire à la direction de propagation de la première onde ultrasonore et en ce que les moyens de traitement (M) permettent de mesurer le temps de propagation de ladite première onde jusqu'à une interface, et le temps de propagation de ladite seconde onde à travers une phase et à partir de données préalablement mémorisées dans les moyens de traitement et des différentes mesures de temps de propagation de déterminer la quantité d'au moins une des phases contenues dans ledit fluide polyphasique.

2. Dispositif selon la revendication 1, caractérisé en ce que la direction de propagation de la première onde ultrasonore est sensiblement perpendiculaire à une interface et en ce que ladite première onde rencontre ladite interface.

3. Dispositif selon les revendications 1 et 2, caractérisé en ce qu'il comporte un système (16) de filtration pour éviter l'accumulation d'éventuelles particules dans la partie inférieure de l'enceinte (1).

4. Dispositif selon l'une des revendications 1 à 3, caractérisé en ce qu'il comporte des moyens pour commander et contrôler un moyen de remplissage et de vidange de l'enceinte (1).

5. Méthode pour déterminer à l'aide d'au moins une onde ultrasonore la composition d'un fluide polyphasique comportant plusieurs phases, au moins deux desdites phases possèdent des impédances acoustiques de valeurs différentes, ledit fluide pouvant comporter des particules solides, caractérisée en ce que :
a) on dérive au moins une partie du fluide polyphasique à analyser dans une enceinte (1),
b) on laisse le fluide polyphasique décanter pendant un temps suffisamment long pour obtenir la séparation des différentes phases,
c) on émet une première onde ultrasonore selon une direction non parallèle à une première interface séparant deux phases, l'onde se propage et traverse l'enceinte (1),
d) on mesure, à l'aide d'un dispositif approprié au moins un premier temps de propagation T1 correspondant à la réflexion de ladite première onde ultrasonore sur une première interface,
e) on émet une seconde onde ultrasonore selon une direction sensiblement perpendiculaire à la direction de propagation de la première onde, à travers une première phase, lorsque cette dernière se trouve dans la partie inférieure de l'enceinte (1) et on mesure le temps de propagation T'1 de ladite seconde onde dans ladite première phase pour en déduire la vitesse réelle V1 de propagation de l'onde dans la première phase et
f) on détermine, à partir du premier temps de propagation T1, de la valeur de vitesse réelle V1 et des caractéristiques géométriques de l'enceinte, la quantité U1 de la première phase dans l'enceinte.

6. Méthode selon la revendication 5 caractérisée en ce que le fluide polyphasique comportant plusieurs phases, au moins une première et une deuxième phase ayant des impédances acoustiques de valeurs suffisamment éloignées et au moins ladite deuxième phase et une troisième phase ayant des valeurs d'impédances acoustiques suffisamment voisines mais distinctes, ledit fluide comportant éventuellement des particules solides caractérisée en ce que :
- on procède aux étapes a) à e) de la revendication 5,
- on mesure au moins les temps de propagation T1 et T2 correspondant respectivement à la réflexion de ladite première onde ultrasonore sur la première et la seconde interface séparant respectivement les première et seconde phases et les seconde et troisième phases,
- on mesure la vitesse réelle de propagation de l'onde dans la première phase selon l'étape e) de la revendication 5,
- on évacue de l'enceinte ledit fluide pendant un temps suffisamment long pour amener ladite seconde phase au niveau de la partie inférieure de l'enceinte, on envoie une seconde onde ultrasonore selon une direction sensiblement perpendiculaire à la direction de propagation de la première onde, à travers une première phase, cette dernière se trouvant dans la partie inférieure de l'enceinte (1) et on mesure le temps de propagation T'2 de ladite seconde onde dans ladite seconde phase pour en déduire la vitesse réelle V2 de propagation de l'onde dans la seconde phase, et
- on détermine à partir des temps de propagation T1 et T2, des valeurs de vitesses réelles V1 et V2, et des caractéristiques géométriques de l'enceinte, les quantités U1 et U2 de la première et de la seconde phase.

7. Méthode selon les revendications 5 et 6, caractérisée en ce que l'on mesure l'atténuation de l'onde après réflexion sur une interface.

8. Méthode selon l'une des revendications 5 à 7, caractérisée en ce qu'elle permet d'éviter l'accumulation de dépôts de particules solides dans l'enceinte munie d'une membrane en procédant aux étapes suivantes :
- on dérive au moins une partie du fluide polyphasique dite échantillon à analyser dans l'enceinte,
- on laisse décanter la partie dérivée du fluide et on effectue des mesures selon les revendications 5 à 7,
- après avoir effectué les mesures, on introduit par la partie supérieure de l'enceinte une quantité de fluide passant préalablement à travers un dispositif de filtration (16), ladite quantité de fluide étant suffisante pour pousser la membrane (11) vers la partie inférieure de l'enceinte de manière à évacuer l'échantillon de fluide polyphasique, les particules éventuelles ayant sédimenté dans la partie inférieure de l'enceinte sont entraînées avec l'échantillon évacué de l'enceinte.

9. Méthode selon l'une des revendications 5 à 8, caractérisée en ce que pour un fluide polyphasique comportant au moins trois phases on détermine la quantité de la troisième phase à partir des caractéristiques géométriques de l'enceinte et des quantités U1 et U2.

10. Méthode selon l'une des revendications 5 à 9, caractérisée en ce que l'on mesure le temps t nécessaire au remplissage total de l'enceinte et on déduit à partir de ce temps t, le débit de chacune desdites phases constituant ledit fluide.

11. Méthode selon l'une des revendications 5 à 10, caractérisée en ce que l'on contrôle la représentativité du fluide polyphasique prélevé pendant le remplissage de l'enceinte.

12. Application de la méthode et du dispositif selon l'une des revendications précédentes à la détermination de la composition d'un effluent pétrolier.

13. Application de la méthode selon l'une des revendications 5 à 11 et du dispositif selon l'une des revendications 1 à 4 à la détection d'une première interface située entre une phase aqueuse et une phase organique et une seconde interface entre une phase organique et une phase gazeuse, lesdites phases constituant la majorité de l'effluent pétrolier.

14. Application de la méthode selon l'une des revendications 5 à 11 et du dispositif selon l'une des revendications 1 à 4 à la détermination du débit de chacune des phases contenues dans un effluent pétrolier.

## Patentansprüche

1. Vorrichtung zur Bestimmung der Zusammensetzung eines polyphasischen, aus mehreren Phasen zusammengesetzten Fluids, wobei diese Phasen durch eine Grenzfläche getrennt sind, wenigstens zwei dieser Phasen akustische Impedanzen ausreichend entfernter Werte aufweisen und wenigstens zwei dieser Phasen akustische im wesentlichen benachbarte, jedoch unterschiedliche Impedanzwerte haben, wobei dieses Fluid Feststoffpartikel umfassen kann; mit einem mit wenigstens einer Einführungsleitung (2, 5) für dieses polyphasische Fluid verbundenen umschlossenen Raum (1), wenigstens einem ersten in diesem umschlossenen Raum angeordneten Mittel (21) zur Erzeugung einer ersten Ultraschallwelle gemäß einer Richtung, die nicht-parallel zu dieser wenigstens zwei Phasen trennenden Grenzfläche ist, wobei das erste Mittel so ausgelegt ist, daß es wenigstens ein Signal empfängt, das aus der Reflexion dieser ersten Ultraschallwelle stammt, wenn sie auf eine zwei Phasen trennende Grenzfläche trifft, zweite Mittel (22, 23) zum Aussenden und Empfangen einer zweiten Ultraschallwelle sowie Verarbeitungsmittel (M), dadurch gekennzeichnet, daß diese zweiten Mittel derart angeordnet sind, daß sie diese zweite Ultraschallwelle in einer Richtung im wesentlichen senkrecht zur Fortpflanzungsrichtung der ersten Welle aussenden und empfangen und daß die Verarbeitungsmittel (M) es erlauben, die Fortpflanzungszeit der ersten Welle bis zu einer Grenzfläche und die Fortpflanzungszeit dieser zweiten Welle durch eine Phase zu messen, und, ausgehend von vorher in den Verarbeitungsmitteln gespeicherten Daten und der verschiedenen Messungen der Fortpflanzungszeiten die Menge wenigstens einer der in diesem polyphasischen Fluid enthaltenen Phasen zu bestimmen.

2. Vorrichtung nach Anspruch 1, dadurch gekennzeichnet, daß die Fortpflanzungsrichtung der ersten Ultraschallwelle im wesentlichen senkrecht zu einer Grenzfläche verläuft und daß diese erste Welle auf diese Grenzfläche trifft.

3. Vorrichtung nach einem der Ansprüche 1 und 2, dadurch gekennzeichnet, daß sie ein Filtersystem (16) umfaßt, um die Ansammlung evtl. Partikel im unteren Teil des umschlossenen Raums (1) zu vermeiden.

4. Vorrichtung nach einem der Ansprüche 1 bis 3, dadurch gekennzeichnet, daß sie Mittel zum Steuern und Regeln eines Füll- und Leermittels für den umschlossenen Raum/die Kammer (1) umfaßt.

5. Verfahren zur Bestimmung, mit Hilfe wenigstens einer Ultraschallwelle, der Zusammensetzung eines polyphasischen mehrere Phasen umfassenden Fluids, wobei wenigstens zwei dieser Phasen akustische Impedanzen unterschiedlicher Werte besitzen und dieses Fluid Feststoffpartikel umfassen kann, dadurch gekennzeichnet, daß:
a) man wenigstens einen Teil des polyphasischen zu analysierenden Fluids in einen umschlossenen Raum (1) umleitet,
b) man das polyphasische Fluid während einer ausreichend langen Zeit dekantieren läßt, um die Trennung der verschiedenen Phasen zu erhalten,
c) man eine erste Ultraschallwelle gemäß einer zu einer ersten die beiden Phasen nicht-parallelen Grenzfläche aussendet, wobei sich die Welle fortpflanzt und den Raum (1) durchsetzt,
d) man mit Hilfe einer geeigneten Vorrichtung wenigstens eine erste Fortpflanzungszeit T1 entsprechend der Reflexion dieser ersten Ultraschallwelle an einer ersten Grenzfläche mißt,
e) man eine zweite Ultraschallwelle gemäß einer Richtung im wesentlichen senkrecht zur Fortpflanzungsrichtung der ersten Welle durch eine erste Phase aussendet, wenn letztere sich im unteren Teil des umschlossenen Raums (1) befindet und man die Fortpflanzungszeit T1 dieser zweiten Welle in dieser ersten Phase mißt, um hieraus die reelle Fortpflanzungsgeschwindigkeit V1 der Welle in der ersten Phase abzuleiten und
f) man, ausgehend von der ersten Fortpflanzungszeit T1 aus dem Wert der reellen Geschwindigkeit V1 und den geometrischen Charakteristiken des umschlossenen Raums die Menge U1 der ersten Phase im umschlossenen Raum bestimmt.

6. Verfahren nach Anspruch 5, dadurch gekennzeichnet, daß das polyphasiche mehrere Phasen umfassende Fluid, von dem eine erste und eine zweite Phase akustische Impedanzen von ausreichend entfernten Werten haben und wenigstens diese zweite Phase und eine dritte Phase Werte akustischer Impedanzen, die ausreichend nahe aneinander, jedoch unterschiedlich sind, haben, und das Fluid gegebenenfalls Feststoffpartikel umfaßt, dadurch gekennzeichnet, daß:
- man die Schritte a) bis e) des Anspruchs 5 durchführt,
- man wenigstens die Fortpflanzungszeiten T1 und T2, jeweils entsprechend der Reflexion dieser ersten Ultraschallwelle an der ersten und der zweiten Grenzfläche, die jeweils die ersten und zweiten Phasen und die zweite und dritte Phase trennt, mißt,
- man die reelle Fortpflanzungsgeschwindigkeit der Welle in der ersten Phase gemäß Stufe e) des Anspruchs 5 mißt,
- man aus dem umschlossenen Raum dieses Fluid während einer ausreichend langen Zeit abzieht, um diese zweite Phase auf die Höhe des unteren Teils des umschlossenen Raums zu führen, man eine zweite Ultraschallwelle gemäß einer Richtung im wesentlichen senkrecht zur Fortpflanzungsrichtung der ersten Welle durch eine erste Phase schickt, wobei letztere sich im unteren Teil des umschlossenen Raums (1) befindet, und man die Fortpflanzungszeit T2 dieser zweiten Welle in dieser zweiten Phase mißt, um hieraus die reelle Fortpflanzungsgeschwindigkeit der Welle in der zweiten Phase abzuleiten und
- man ausgehend von Fortpflanzungszeiten T1 und T2 der Werte der reellen Geschwindigkeiten V1 und V2 und der geometrischen Charakteristiken des umschlossenen Raums die Mengen U1 und U2 der ersten und zweiten Phase bestimmt.

7. Verfahren nach den Ansprüchen 5 und 6, dadurch gekennzeichnet, daß man die Abschwächung der Welle nach Reflexion an einer Grenzfläche mißt.

8. Verfahren nach einem der Ansprüche 5 bis 7, dadurch gekennzeichnet, daß es die Ansammlung von Feststoffpartikelabscheidungen im umschlossenen mit einer Membran versehenen Raum zu messen gestattet, wobei die folgenden Schritte durchgeführt werden:
- man leitet wenigstens einen Teil des polyphasischen Fluids dieser zu analysierenden Probe in den umschlossenen Raum,
- man läßt den abgeleiteten Teil des Fluids dekantieren und man nimmt Messungen gemäß den Ansprüchen 5 bis 7 vor,
- nach Durchführung der Messungen führt man über den oberen Teil des umschlossenen Raums eine Fluidmenge ein, die vorher durch eine Filtervorrichtung (16) gegangen ist, wobei diese Fluidmenge ausreichend ist, um die Membran (11) gegen den unteren Teil des umschlossenen Raums derart zu beaufschlagen, daß die Probe polyphasischen Fluids abgezogen wird, wobei die evtl. Partikel, die im unteren Teil des umschlossenen Raums sedimentiert haben, mit der aus dem umschlossenen Raum abgezogenen Probe mitgerissen werden.

9. Verfahren nach einem der Ansprüche 5 bis 8, dadurch gekennzeichnet, daß für ein polyphasisches Fluid mit wenigstens drei Phasen man die Menge der dritten Phase aus den geometrischen Charakteristiken des umschlossenen Raums und den Mengen U1 und U2 bestimmt.

10. Verfahren nach einem der Ansprüche 5 bis 9, dadurch gekennzeichnet, daß man die Zeit t mißt, die für den Füllgesamtvorgang des umschlossenen Raums notwendig ist und man aus dieser Zeit t die Menge oder den Durchsatz jeder dieser das Fluid bildenden Phasen herleitet.

11. Verfahren nach einem der Ansprüche 5 bis 10, dadurch gekennzeichnet, daß man das repräsentative Verhalten des polyphasischen während des Füllvorgangs des umschlossenen Raums entnommenen Fluids regelt.

12. Anwendung des Verfahrens und Vorrichtung nach einem der vorhergehenden Ansprüche auf die Bestimmung der Zusammensetzung eines Edölabstroms.

13. Anwendung des Verfahrens nach einem der Ansprüche 5 bis 11 und der Vorrichtung nach einem der Ansprüche 1 bis 4 auf den Nachweis einer ersten zwischen einer wässrigen Phase und einer organischen Phase befindlichen Grenzfläche und einer zweiten zwischen einer organischen und einer gasförmigen Phase befindlichen Grenzfläche, wobei die Phasen die Majorität des Erdölabstroms darstellen.

14. Anwendung des Verfahrens nach einem der Ansprüche 5 bis 11 und der Vorrichtung nach einem der Ansprüche 1 bis 4 auf die Bestimmung des Durchsatzes jeder in einem Erdölabstrom enthaltenen Phasen.

## Claims

1. A device for determining the composition of a multi-phase fluid consisting of several phases, said phases being separated by an interface, at least two of said phases having acoustic impedance values that are substantially far apart and at least two of said phases having acoustic impedance values substantially close but different, said fluid possibly containing solid particles, consisting of a container (1) linked to at least one inlet pipe (2, 5) for said multi-phase fluid, at least a first means (21) located in said container for generating a first ultrasonic wave in one direction, not parallel with said interface separating at least two phases, said first means being designed to receive at least one signal from the reflection of said first ultrasonic wave when it encounters an interface separating two phases, second means (22, 23) for emitting and receiving a second ultrasonic wave and processing means (M), characterised in that the second means are arranged in such a way that said second ultrasonic wave is emitted and received in a direction substantially perpendicular to the direction in which the first ultrasonic wave was propagated, in that the processing means (M) enable the propagation of said first wave to an interface and the propagation time of said second wave through a phase to be measured and, on the basis of data previously stored in the processing means together with the different propagation time measurements, the quantity of at least one of the phases contained in said multi-phase fluid can be determined.

2. A device as claimed in claim 1, characterised in that the direction in which the first ultrasonic wave is propagated is substantially perpendicular to an interface and in that said first wave encounters said interface.

3. Device as claimed in claims 1 and 2, characterised in that it has a filter system (16) to prevent any build-up of particles in the lower part of the container (1).

4. A device as claimed in one of claims 1 to 3, characterised in that it has means for controlling and regulating a means for filling and emptying the container (1).

5. A method of determining by means of at least one ultrasonic wave the composition of a multi-phase fluid consisting of several phases, at least two of said phases having different values of acoustic impedance, said fluid possibly containing solid particles, characterised in that:
a) at least a proportion of the multi-phase fluid to be analysed is drawn off into a container (1),
b) the multi-phase fluid is left to decant for a sufficient period of time to allow the different phases to separate,
c) a first ultrasonic wave is emitted in a direction that is not parallel with a first interface separating two phases, the wave being propagated and passing through the container (1),
d) an appropriate device is used to measure at least a first propagation time T1 representing the reflection of said first ultrasonic wave on a first interface,
e) a second ultrasonic wave is emitted in a direction that is substantially perpendicular to the direction in which the first wave was propagated, through a first phase, this latter being located in the lower part of the container (1), and the propagation time T'1 of said second wave in said first phase is measured in order to calculate therefrom the real propagation speed V1 of the wave in the first phase and
f) using the first propagation time T1, the value of the real speed V1 and the geometric characteristics of the container, the quantity U1 of the first phase in the container is calculated.

6. A method as claimed in claim 5, characterised in that the multi-phase fluid consisting of several phases, at least a first and a second phase having acoustic impedance values that are substantially far apart and at least said second phase and a third phase having acoustic impedance values that are substantially close but different, said fluid possibly containing solid particles, characterised in that :
- steps a) to e) as described in claim 5 are carried out,
- at least the propagation times T1 and T2 are measured, corresponding respectively to the reflection of said first ultrasonic wave on the first and the second interfaces separating respectively the first and second phases and the second and third phases,
- the real propagation speed of the wave in the first phase is measured as described in step e) of claim 5,
- the container is drained of said fluid for a sufficient period of time for said second phase to reach the level of the lower part of the container, a second ultrasonic wave is emitted in a direction substantially perpendicular to the direction in which the first wave was propagated, through a first phase, this latter being located in the lower part of the container (1), and the propagation time T'2 of said second wave in the said second phase is measured in order to calculate therefrom the real propagation speed V2 of the wave in the second phase and
- using the propagation times T1 and T2, the values of the real speeds V1 and V2 and the geometric characteristics of the container, the quantities U1 and U2 of the first and second phases are calculated.

7. A method as claimed in claim 5 and 6, characterised in that the attenuation of the wave is measured after it has been reflected on an interface.

8. A method as claimed in one of claims 5 to 7, characterised in that it enables the accumulation of deposits of solid particles in the container, fitted with a membrane, to be avoided by carrying out the following steps:
- at least a proportion of the multi-phase fluid, which will be the analysis sample, is drawn into the container,
- the proportion of fluid drawn off is left to decant and the measurements described in claims 5 to 7 are taken,
- once the measurements have been completed, a quantity of fluid, which has preferably been passed beforehand through a filter device (16), is introduced into the upper part of the container, said quantity of fluid being sufficient to push the membrane (11) towards the lower part of the container so as to discharge the multi-phase fluid sample, and any particles that might have formed a sediment in the lower part of the container are carried away with the sample discharged from the container.

9. A method as claimed in one of claims 5 to 8, characterised in that in the case of a multi-phase fluid consisting of at least three phases, the quantity of the third phase is determined on the basis of the geometric characteristics of the container and the quantities U1 and U2.

10. A method as claimed in one of claims 5 to 9, characterised in that the time t needed to fill the container completely is measured and this time t is used to calculate the flow rate of each of said phases making up said fluid.

11. A method as claimed in one of claims 5 to 10, characterised in that a check is performed whilst filling the container to ensure that the multi-phase fluid sample is representative.

12. Application of the method and the device as claimed in one of the preceding claims to determining the composition of a petroleum effluent.

13. Application of the method as claimed in one of claims 5 to 11 and of the device as claimed in one of claims 1 to 4, to detecting a first interface located between an aqueous phase and an organic phase and a second interface between an organic phase and a gaseous phase, said phases making up the greater part of the petroleum effluent.

14. Application of the method as claimed in one of claims 5 to 11 and the device as claimed in one of claims 1 to 4 to determining the flow rate of each of the phases contained in a petroleum effluent.
